(19) Europäisches Patentamt
European Patent Office
Office européen des brevets

(11) Veröffentlichungsnummer: **0 256 312 B1**

(12) # EUROPÄISCHE PATENTSCHRIFT

(45) Veröffentlichungstag der Patentschrift: **11.03.92**

(21) Anmeldenummer: **87110185.3**

(22) Anmeldetag: **15.07.87**

(51) Int. Cl.[5]: **C08F 220/06**, C08F 220/60, C08F 8/32, C09C 3/04, //C09D17/00,(C08F220/06, 220:60),(C08F220/60,220:60)

(54) **Amphotere wasserlösliche Polymere, Verfahren zu ihrer Herstellung und ihre Verwendung als Dispergierhilfsmittel.**

(30) Priorität: **23.07.86 DE 3624813**

(43) Veröffentlichungstag der Anmeldung: **24.02.88 Patentblatt 88/08**

(45) Bekanntmachung des Hinweises auf die Patenterteilung: **11.03.92 Patentblatt 92/11**

(84) Benannte Vertragsstaaten: **AT BE CH DE ES FR GB IT LI NL SE**

(56) Entgegenhaltungen:
**CH-A- 479 636**
**DE-A- 3 047 688**
**FR-A- 1 540 020**

(73) Patentinhaber: **Chemische Fabrik Stockhausen GmbH**
**Bäkerpfad 25**
**W-4150 Krefeld(DE)**

(72) Erfinder: **Hartan, Hans-Georg, Dr.Dipl.-Chem.**
**Vogelsang 171**
**W-4178 Kevelaer 4(DE)**
Erfinder: **Landscheidt, Alfons, Dr.Dipl.-Chem.**
**Lefarthstrasse 11**
**W-4150 Krefeld(DE)**

(74) Vertreter: **Klöpsch, Gerald, Dr.-Ing. Patentanwälte Klöpsch & Flaccus**
**An Gross St. Martin 6**
**W-5000 Köln 1(DE)**

**EP 0 256 312 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von amphoteren wasserlös, lichen Polymeren als Mahlhilfsmittel und/oder Dispergierhilfsmittel für die Papierherstellung in Gegenwart eines Retentionshilfsmittels.

Füllstoffe für die Papierindustrie wie auch für einige andere Industriebereiche, wie z.B. die Lack-und Farbonindustrie, werden nicht nur in Pulverform, sondern auch als wäßrige Dispersion angeboten. Für den Einsatz von Füllstoffen in Form von Dispersionen sprochen ökonomische Gründe - Vorsicht auf Trocknung - wie auch die Möglichkeit eines rationelleren Arbeitsablaufes bei der Papierherstellung. Des Weiteren entfällt das bisherige Staubproblem am Arbeitsplatz.

Die Herstellung von Füllstoffaufschlämmungen ist bekannt. Üblicherweise werden als Dispergiermittel niedrigmolekulare wasserlösliche Polymeren, die einen hohen Anteil an anionsich wirkenden Gruppen - z.B. Carboxylgruppen - tragen, eingesetzt. Handelsprodukte sind in vielen Fällen Homopolymerisate der Acrylsäure in Form ihres Natrium-oder Ammoniumsalzes.

In der DE-OS 31 23 732 wird ein Verfahren beschrieben, bei dem als Dispergiermittel Copolymerisate aus Acrylsäure und Acrylamidomethylpropansulfonsäure verwendet werden. Es resultieren hochkonzentrierte wäßrige Pigmentanschlämmungen, deren Viskosität bei Erhöhung der Temperatur nur wenig abfällt. Ein solches Verhalten ist speziell für den Mahlprozess günstig.

Die EP 0 035 640 beschreibt die Verwendung von oxalkylierten Fettammoniumsalzen als Dispergiermittel. Damit hergestellte Füllstoffaufschlämmungen zeichnen sich durch extrem hohe erreichbare Feststoffkonzentrationen von mehr als 75 % aus.

Die Vorwendung einer Kombination eines anionsichen Polymeren mit einem kationsichen Polymeren zur Dispergierung von calciniertem Ton wird in der DE-OS 32 30 737 beschrieben. Als anionisches Polymer wird bevorzugt ein Säure enthaltendes, vernetztes acrylisches Emulsionscopolymer und als kationisches Polymer ein quarternäres Polyamin eingesetzt. Durch eine solche Dispergiermittelkombination wird eine verminderte Absetzung des Kaolins im Lagertank sowie eine Verringerung der besonders beim Kaolin sonst ausgeprägten Dilatanz erreicht.

In dem EP 0129329 werden wasserlösliche Copolymerisate zur Herstellung von Pigmentdispersionen verwendet, die Carboxyl-und Sulfonsäuregruppen enthalten, wobei das Molekulargewicht zwischen 1000 und 5000 liegt und die Polydispersität des Copolymeren kleiner als 1.5 ist. Durch die geringe Polydispersität werden verbesserte Dispergiereigenschaften erhalten.

Calciumcarbonataufschlämmungen mit einem Anteil von wenigstens 87 % unter 2µm Partikelgröße werden in der EP 0 108 842 beansprucht. Als Dispergiermittel werden Copolymerisate aus Acrylsäure und Acrylamidomethylpropansulfonsäure mit Molekulargewichten zwischen 1000 und 2000 eingesetzt. Die erfindungsgemäßen Dispersionen zeichnen sich durch eine verbesserte Fließstablilität aus.

In der CH-A-479 636 werden Copolymere von substituierten basischen Acrylsäureamiden mit ethylenisch ungesättigten Monocarbonsäuren wie Acrylsäure sowie weiteren wasserunlöslichen, ethylenisch ungesättigten Monomeren beschrieben. Diese Copolymerisate sind vor allem zur Beschichtung von Oberflächen geeignet und können in Form von wässrigen Emulsionen oder Dispersionen auch in der Papier- und Textilveredelung, so zur Oberflächenverleimung von Papieren oder in der Textilausrüstung in Kombination mit Hydrophobiermitteln als Binder eingesetzt werden. Besonders bevorzugt ist die Verwendung der Polymerisate als antithrombogene Beschichtung mit einem Gehalt an Heparin in gleichmäßig feiner Verteilung.

Die DE-A-30 47 688 beschreibt die Herstellung amphoterer Copolymerisate aus einer basischen, polymerisierbaren Verbindung wie einem basisch reagierenden substituierten (Meth-)acrylsäureamid oder (Meth-)acrylsäureesterderivat mit einer entsprechenden ungesättigten Säure wie Methacrylsäure. Diese amphoteren Copolymerisate sind geeignet als Emulgator, insbesondere zum Emulgieren von Masse- und Oberflächenleimungsmitteln für Papier.

Bei allen Vorteilen zeigen konventionell, d.h. unter Zusatz von anionischen Dispergiermitteln hergestellte Füllstottaufschlämmungen einen gravierenden Nachteil. In aller Regel werden bei der Papierherstellung zur Entwässerungsbeschleunigung und zur Zurückhaltung der Faser-und Füllstoffe Retentionsmittel eingesetzt. Diese Retentionsmittel sind zum größten Teil kationisch modifizierte Polyelektrolyte. Die kationischen Gruppen dieser Retentionsmittel reagieren mit polymergebundenen anionischen Gruppen unter Neutralisation, d.h. eine der Anzahl anionischer Gruppen äquivalente Menge an kationischen Gruppen wird gebunden und die für die Retentionswirkung erforderliche Anzahl an kationischen Gruppen dadurch reduziert.

Der hier beschriebene Effekt tritt ein, wenn eine mit anionischen Dispergiermittel hergestellte Füllstoffaufschlämmung in der Papiermasse verwendet wird. Ein befriedigender Retentionseffekt kann dann nur durch eine drastische höhere Zugabemenge an Retentionsmitteln erreicht werden.

Aufgabe der vorliegenden Erfindung ist es, Mahlhilfsmittel und/oder Dispergiermittel zur Herstellung von

Füllstoffaufschlämmungen für die Papierherstellung zur Verfügung zu stellen, die diesen retentionsschädlichen Effekt nicht zeigen.

Gelöst wurde diese Aufgabe durch die Verwendung von amphoteren wasserlöslichen Copolymerisaten, die **a)** 90 bis 30 Gew.-% Acrylsäure und/oder Methacrylsäure, **b)** 10 bis 60 Gew.-% einer Verbindung der Formel

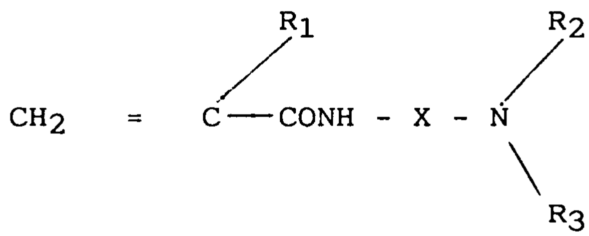

worin $R_1$ Wasserstoff oder Methylrest, $R_2$ und $R_3$, die gleich oder verschieden sind, den Methyl- oder Ethylrest bedeuten und X für einen gegebenenfalls verzweigten Alkylenrest mit 1 bis 5 Kohlenstoff-Atomen steht, **c)** erforderlichenfalls 0 bis 50 Gew.-% Acrylamidomethylpropansulfonsäure, **d)** 0 bis 10 Gew.-% einer anderen ethylenisch ungesättigten Verbindung einpolymerisiert enthalten und das Molekulargewicht, gemessen bei einem pH-Wert von 8,0 kleiner als 100.000 ist, als Mahlhilfsmittel und/oder Dispergiermittel in hochkonzentrierten wäßrigen Aufschlämmungen von Pigmenten und Füllstoffen für die Papierherstellung in Gegenwart eines Retentionshilfsmittels.

Bevorzugt weisen die erfindungsgemäßen Polymeren ein Molekulargewicht von 500 bis 50 000 auf, bestimmt nach der Methode der Geipermeationschromatographie.

Als Monomer b) können N-alkylsubstituierte Acrylamide oder Methacrylamide eingesetzt werden, die am Alkylrest eine tertiäre Aminogruppe tragen. Beispielhaft seien genannt Dimethylaminopropylacrylamid, Dimethylaminopropylmethacrylamid, Dimethylamino-2,2-dimethyl propylacrylamid, Dimethylamino-2,2-dimethylpropylmethacrylamid und Dimethylaminopropylacrylamid. Weiterhin kann als Monomer b) Acrylamid oder Methacrylamid eingesetzt werden, das nach der Polymerisation mit Formaldehyd und Dimethylamin zur entsprechenden Mannichbase umgesetzt wird.

Als Beispiel für das Monomer d) seien genannt Acrylamid, Acrylsäuremethylester, Hydroxypropylacrylat und Acrylnitril. Durch Monomere der Gruppe d) soll eine Modifikation der Eigenschaften der Copolymerisate erreicht werden.

Die Dispergiermittel können nach an sich bekannten Polymerisationsmethoden erhalten werden. Vorzugsweise wird die Polymerisation der Monomeren in wässriger Lösung oder in Gemischen aus Wasser und mit Wasser mischbaren Lösungsmitteln wie Alkohol, z.B. Isopropanol, durchgeführt. Die Initiierung der Polymerisation erfolgt mit Hilfe von radikalen Polymerisationskatalysatoren. Verwendet werden können Redoxsysteme und/oder thermisch zerfallende Radikalbildner vom Typ der Azoverbindungen wie z.B. Azoisobuttersäurenitril. Als Redoxsysteme eignen sich z.B. Kombinationen aus Wasserstoffperoxid, Salzen der Peroxydischwefelsäure oder tert.Butylhydroperoxid mit Natriumsulfit oder Natriumdithionit als Reduktionskomponente.

Zur Erzielung der erfindungsgemäßen Molekulargewichte unter 100 000 ist es sinnvoll, die Polymerisation in Gegenwart von Polymerisationsreglern durchzuführen. Dies können niedrige Alkohole mit 1 bis 4 Kohlen stoffatomen sein, vorzugsweise Isopropanol. Als Regler wirksam sind weiterhin Hydroxylammoniumsalze sowie Mercaptane, z.B. Mercaptoethanol oder Thioglykolsäure.

Die Copolymerisation kann so durchgeführt werden, daß man einen Teil des Monomerengemisches vorlegt, die Copolymerisation startet und dann die Monomerenmischung stetig zudosiert. Die Temperatur bei der Copolymerisation kann in einem weiten Bereich schwanken. Je nach verwendeten Katalysatoren können Temperaturen zwischen 50 ° C und 200 ° C optimal sein. Möglich ist es auch, die Polymerisation am Siedepunkt des Lösungsmittels oder unter Druck bei darüberliegenden Temperaturen durchzuführen.

Oft kann es vorteilhaft sein, die Polymerisation unter adiabatischen Bedingungen durchzuführen. Der Polymerisationsstart erfolgt dann zweckmäßig bei niedrigen Temperaturen, z.B. bei 20 ° C. Die durch die freiwerdende Polymerisationswärme erreichte Endtemperatur hängt von den eingesetzten Monomeren und Konzentrationsverhältnissen ab und kann bei einem entsprechenden Druck z.B. bis 180 ° C betragen.

Der pH-Wert während der Copolymerisation kann in einem weiten Bereich schwanken. Vorteilhaft wird die Copolymerisation bei niedrigen pH-Werten durchgeführt, möglich sind jedoch auch pH-Werte über dem Neutralpunkt.

Nach der Polymerisation wird mit einer wäßrigen Base, z.B. Natronlauge, Ammoniak oder Kalilauge ein pH-Wert im Bereich von 5 bis 12, vorzugsweise 7 bis 8, eingestellt.

Die Copolymerisate werden zur Herstellung von konzentrierten Feststoffaufschlämmungen verwendet. Dabei kann das Polymer entweder direkt beim Mahlprozess oder nach dem Aufmahlen als Dispergiermittel zugegeben werden. Als Pigmente seien beispielsweise Kreide, Kaolin, Satinweiß, Titandioxid und Clay genannt. Bezogen auf Pigmente, betragen die Einsatzmengon der Copolymerisate 0.02 bis 1.0 %, vorzugsweise 0.05 bis 0,2 %. Die Feststoffgehalte der Pigmentaufschlämmungen können je nach eingesetztem Pigment und seiner Partikelgröße und Größenverteilung bis zu 80 Gew.-% betragen.

Die erfindungsgemäß mit den Copolymerisaten hergestellten Pigmentaufschlämmungen zeichnen sich durch eine gegenüber konventionellen Produkten auf Basis von Polyacrylaten deutlich verbesserte Lagerstabilität aus.

Die Pigmentaufschlämmungen werden bei der Papierherstellung eingesetzt. In der Regel werden die wäßrigen Pigmentdispersionen in den Papierdickstoff eindosiert. Nach Verdünnung auf ca. 0.5 % wird der Papierstoff dann mit dem Retentionsmittel versetzt und gelangt über den Stoffauflauf aus das Sieb der Papiermaschine. Beim Einsatz der Pigmentaufschlämmungen, die mit den neuartigen Dispergiermitteln hergestellt worden sind, wird im Vergleich zu konventionellen Produkten eine stark verbesserte Wirksamkeit der Retentionsmittel festgestellt. Dies gilt sowohl für die Faserstoff-wie auch für die Füllstoffretention.

Mit dem sog. Britt-Jar-Tester lassen sich die Vorgänge im Stoffauflauf und in der anschließenden Siebpartie einer Papiermaschine sehr gut simulieren. Während beim Einsatz von handelsüblichen Dispergiermitteln eine Verminderung der Retention um ca. 10 % festzustellen ist, wird bei verwendung der neuartigen Produkte die Retention nicht negativ beeinflußt.

Die Erfindung wird durch die nachfolgenden Beispiele erläutert; Teile sind Gewichtsteile.

Herstellung der Copolymerisate

Copolymerisat 1

In eine Mischung aus 675 Teilen Wasser, 38 Teilen 37 %ige Salzsäure und 225 Teile Acrylsäure werden unter Rühren und Kühlen 62 Teile Dimethylaminopropylacrylamid eingetragen. Es stellt sich ein pH-Wert von 1.6 ein. Die Temperatur beträgt 20 °C. Nun werden nacheinander 42 Teile 35 %iges Wasserstoffperoxid, 36 Teile Mercaptoethanol und 2 Teile 1%ige Eisen(11)-sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95 °C erreicht. Nun werden 4.5 Teile 35 %iges Wasserstoffperoxid und 2 Teile 40%ige Hydroxylaminhydrochloridlösung in Wasser eingerührt. Man läßt eine Stunde nachreagieren und durch Zugabe von 269 Teilen 45 %ige Natronlauge stellt sich ein pH-Wert von 8.0 ein.

Die Viskosität des Produkts beträgt 30 mPa.s. Die Molekulargewichtsbestimmung mittels Geipermeationschromatographie (GPG) ergab einen Wert von 920.

Copolymerisat 2

In eine Mischung aus 621 Teilen Wasser, 45 Teilen 37 %ige Salzsäure und 263 Teilen Acrylsäure werden unter Kühlen 72 Teile Dimethylaminopropylacrylamid eingetragen. Es stellt sich ein pH-Wert von 1,6 ein. Die Temperatur beträgt 20 °C. Nun werden nacheinander 3 Teile 35 %iges Wasserstoffperoxid, 1 Teil Mercaptoethanol und 0,5 Teile 1 %ige Eisen(11)sulfatlösung in die Monomerenlösung eingerührt und dann der Rührer abgestellt. Die sofort beginnende Polymerisation macht sich in einem Temperaturanstieg bemerkbar. Nach ca. 8 Minuten wird die Endtemperatur von 95 °C erreicht. Nun werden 4.5 Teile 35 %iges Wasserstoffperoxid und 2 Teile 40 %ige Hydroxylaminhydrochloridlösung in Wasser eingerührt. Man läßt eine Stunde nachreagieren und stellt durch Zugabe von 309 Teilen 45 %ige Natronlauge einen pH-Wert von 8.0 ein. Die Viskosität des Produktes beträgt 9500 mPa.s. Die Molekulargewichtsbestimmung ergab einen Wort von 44000.

Copolymerisat 3

In eine Mischung aus 603 Teilen Wasser, 72 Teilen 37 %ige Salzsäure und 210 Teilen Acrylsäure werden unter Kühlen 115 Teile Dimethylaminopropylmethacrylamid eingetragen. Es stellt sich ein pH-Wert von 1.6 ein. Die Temperatur beträgt 20 °C. Nun werden nacheinander 19 Teile 35 %iges Wasserstoffperoxid, 5 Teile Mercaptoethanol und 0,5 Teile 1 %ige Eisen(11)sulfatlösung in die Monomerenlösung eingerührt und dann der Rührer abgestellt. Die sofort beginnende Polymerisation macht sich in einem

Temperaturanstieg bemerkbar. Nach ca. 4 Minuten wird die Endtemperatur von 95 °C erreicht. Nun werden 4.5 Teile 35 %iges Wasserstoffperoxid und 2 Teile 40 %ige Hydroxylaminhydrochloridlösung in Wasser eingerührt. Man läßt eine Stunde nachreagieren und stellt durch Zugabe von 255 Teilen 45 %ige Natronlauge einen pH-Wert von 8.0 ein. Die Viskosität des Produktes beträgt 180 mPa.s. Die Molekulargewichtsbestimmung ergab einen Wert von 6300.

Copolymerisat 4

In eine Mischung aus 592 Teilen Wasser, 90 Teilen 37%ige Salzesäure und 175 Teilen Acrylsäure werden unter Kühlen 144 Teile Dimethylamino-2,2-dimethylpropylacrylamid eingetragen. Es stellt sich ein pH-Wert von 1,6 ein. Die Temperatur beträgt 20°C. Nun werden nacheinander 28 Teile 35 %iges Wasserstoffperoxid, 24 Teile Mercaptoethanol und 1 Teil 1 %ige Eisen(11)sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95 °C erreicht. Nun werden 4,5 Teile 35 %iges Wasserstoffperoxid und 2 Teile 40 %ige Hydroxylaminhydrochloridlösung in Wasser eingerührt. Man läßt eine Stunde nachreagieren und stellt durch Zugabe von 216 Teilen 45 %ige Natronlauge einen pH-Wert von 8,0 ein. Die Viskosität des Produktes beträgt 39 mPa.s. Die Molekulargewichts bestimmung ergab einen Wert von 1800.

Copolymerisat 5

In eine Mischung aus 580 Teilen Wasser, 107 Teilen 37 %ige Salzsäure und 140 Teilen Acrylsäure werden unter Kühlen 173 Teile Dimethylamino-2,2-dimethylpropylmethacrylamid eingetragen. Es stellt sich ein pH-Wert von 1,6 ein. Die Temperatur beträgt 20 °C. Nun werden nacheinander 28 Teile 35 %iges Wasserstoffperoxid, 24 Teile Mercaptoethanol und 1 Teil 1 %ige Eisen(11)sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95°C erreicht. Nun werden 4,5 Teile 35 %iges Wasserstoffperoxid und 2 Teile 40 %ige Hydroxylaminhydrochloridlösung in Wasser eingerührt. Man läßt eine Stunde nachreagieren und stellt durch Zugabe von 174 Teilen 45 %ige Natronlauge einen pH-Wert von 8,0 ein. Die Viskosität des Produktes beträgt 88 mPa.s. Die Molekulargewichtsbestimmung ergab einen Wert von 4700.

Copolymerisat 6

In eine Mischung aus 621 Teilen Wasser, 45 Teilen 37 %ige Salzsäure, 125 Teilen Acrylsäure, 50 Teilen Methacrylsäure und 200 Teilen Acrylamidomethylpropansulfonsäure werden unter Kühlen 72 Teile Dimethylaminopropylacrylamid eingetragen. Es stellt sich ein pH-Wert von 1,6 ein. Die Temperatur beträgt 20°C. Nun werden nacheinander 28 Teile 35 %iges Wasserstoffperoxid, 24 Teile Mercaptoethanol und ein Teil 1 %ige Eisen(11)sulfatlösung in die Monomerenlösung eingerührt und dann der Rührer abgestellt. Die sofort beginnende Polymerisation macht sich in einem Temperaturanstieg bemerkbar. Nach ca. 2 Minuten wird die Endtemperatur von 95 °C erreicht. Nun werden 4,5 Teile 35 %iges Wasserstoffperoxid und 2 Teile 40 %iges Hydroxylaminhydrochloridlösung in Wasser eingerührt. Man läßt eine Stunde nachreagieren und stellt durch Zugabe von 309 Teilen 45 %ige Natronlauge einen pH-Wert von 8,0 ein. Die Viskosität des Produkts beträgt 55 mPa.s. Die Molekulargewichtsbestimmung ergab einen Wert von 2900.

Copolymerisat 7

In einem Reaktionskolben wurden 64 Teile Wasser, 10 Teile Acrylsäure. 10 Teile 38 %ige wäßrige Acrylamidlösung und 12 Teile 35 %iges Waserstoffperoxid vorgelegt und auf 90°C erhitzt. In einem anderen Gefäß wurde ein Gemisch aus 155 Teilen 38 %ige wäßrige Acrylamidlösung und 177 Teilen Acrylsäure hergestellt und diese Lösung sodann unter Rühren über einen Zeitraum von ca. 1 Stunde in die wasserstoffperoxidhaltige Lösung eingetragen. Durch weitere Einlaufstutzen wurden 54 Teile Wasserstoffperoxid (35 %ig) und 12 g Hydroxylaminhydrochlorid (40 %ig in Wasser) proportional zur Monomermischung eindosiert. Die Temperatur wurde ständig bei 90°C gehalten. Nach Beendigung der Zugabe werden 4,5 Teile Wasserstoffperoxid (35 %ig) und 2 Teile Hydroxylaminhydrochloridlösung (40 %ig in Wasser) eingesprüht. Man läßt eine Stunde nachreagieren und stellt durch Zugabe von 229 Teilen 45 %ige Natronlauge auf einen pH-Wert von 8.0 ein.

Nach Abkühlen auf 20°C werden unter Rühren 99 Teile 40 %ige Dimethylaminhydrochlorid und 71,5

Teile 37 %iges Formalin zugegeben. Man läßt 15 Stunden nachreagieren. Die Viskosität des Produktes beträgt 36 mPa.s. Die Molekulargewichtsbestimmung ergab 1750.

Copolymerisat 8

Entsprechend der beim Copolymerisat 7 angegebenen Verfahrensweise werden 546 Teile Wasser, 329 Teile 38 %ige Acrylamidlösung und 125 Teile Acrylsäure umgesetzt. Die Neutralisation erfolgt mit 153 Teilen 45 %iger Natronlauge, für die anschließende Umsetzung zur Mannichbase werden 198 Teile 40 %iges Dimethylamin und 143 Teile 37 %iges Formalin eingesetzt. Die Viskosität des Produktes beträgt 32 mPa.s. Die Molekulargewichtsbestimmung ergab 1360.

Herstellung der Pigmentdispersionen

Allgemeine Vorschrift

In einem 400 ml-Becherglas werden 145 g Wasser mit der in der Tabelle angegebenen Menge Dispergiermittel (jeweils 100 %iges Polymerisat) versetzt und der pH-Wert auf 10,0 eingestellt. Unter Rühren mit einem Laborschnellrührer, der mit einer 30 mm großen Dissolverscheibe versehen ist. (Drehzahl 4000 UpM) werden 355 g einer fein aufgemahlenen Kreide (Teilchengröße 90 % kleiner 2µm) portionsweise eingestreut. Nach Eintragen der Gesamtmenge des Pigments wird noch 15 Minuten bei einer Drehzahl von 5000 UpM weitergerührt. Danach wird die Viskosität des Pigmentauf schlämmers bestimmt. Der Trockenstoffgehalt beträgt 71 %.

| Aufschlämmung Nr. | Dispergiermittel Nr. Beispiel | Zusatz in % bez. auf Pigment | Viskosität mPa.s | pH-Wert |
|---|---|---|---|---|
| 1 | 1 | 0,1 | 90 | 9,72 |
| 2 | 1 | 0,05 | 136 | 9,77 |
| 3 | 2 | 0,15 | 230 | 9,89 |
| 4 | 3 | 0,1 | 245 | 9,75 |
| 5 | 4 | 0,15 | 290 | 9,39 |
| 6 | 5 | 0,2 | 340 | 9,57 |
| 7 | 6 | 0,1 | 86,5 | 9,63 |
| 8 | 6 | 0,05 | 148 | 9,71 |
| 9 | 7 | 0,1 | 80 | 9,76 |
| 10 | 7 | 0,05 | 99 | 9,87 |
| 11 | 8 | 0,1 | 79 | 9,81 |
| 12 | 8 | 0,1 | 260 | 9,75 |
| 13 | Vergleich | 0,1 | 85 | 9,82 |

Retentionsversuche

Mit den bereits beschriebenen Dispergierhilfsmitteln und den daraus hergestellten Pigment-bzw. Füllstoff-Dispersionen wurden Retentionsversuche durchgeführt, und zwar nach dem in der Fachliteratur

beschriebenen und anerkannten Britt-Jar-Dynamic Drainage/Retentions-Test durchgeführt. ("New methods for monitoring retention K.W. Britt, J.E. Unbehend Tappi, February 1976, Vol. 59, No. 2, S. 67-70")

Für die Retentionsversuche wurde eine Standard-Stoff-Zusammensetzung nach folgender Rezeptur verwendet:

Der Faserstoff bestand zu 70 % aus Langfaser-Cellulose und zu 30 % aus Kurzfaser-Cellulose. Dem Faserstoff wurden 20 % Füllstoff, in diesem Fall Kreide der Qualität Omya DX 1, zugegeben, wobei Kreide entweder

- ohne Dispergierhilfsmittel,
- mit einem handelsüblichen anionischen Dispergierhilfsmittel (hier Polystabil S 312: Homopolymerisat aus Natriumacrylat, Molekulargewicht S 312)
- oder mit einem der neuartigen Dispergierhilfsmittel

vorbehandelt war.

Bei der Verwendung von Kreide als Füllstoff war der ph-Wert des Papierstoffes auf etwa 7 bis 7,5 eingestellt (neutrale Arbeitsweise). Geprüft wurde die an dem Prüfstoff (Faserstoff einschließlich Füllstoff, 80 : 20 Gew.-%) sich ergebende Retention sowohl ohne Zusatz eines Retentionshilfsmittels als auch, und dies überwiegend, bei Zusatz eines bekannten kationischen polymeren Retentionshilfsmittels Praestol P 411 K: (Copolymerisat aus Acrylamid und einem Acrylsäureester, Katonischer Anteil 25 Gew.-%):hiermit sollten eventuelle Wechselwirkungen zwischen den als Dispergierhilfsmittel eingesetzten Produkten und den verwendeten kationischen Retentionshilfsmitteln festgestellt werden.

Die Durchführung der Britt-Jar-Test-Methode und die danach ermittelte Retention wird als Stand der Technik vorausgesetzt. Die Versuche wurden bei einer Rührerdrehzahl von 600 UpM durchgeführt. Der als "Retention" ausgewiesene Meßwert gibt an, wieviel % Masseanteile des eingesetzten Stoffes auf dem Sieb zurückgehalten werden, d.h. wie hoch der für die Blattbildung auf dem Sieb verbleibende Stoff-Masseanteil (in Gew.-%) ist.

Je höher dieser Wert liegt, umso besser ist die Retention, d.h. umso mehr Masse des eingesetzten Stoffes wird tatsächlich zum Papierblatt umgesetzt.

Es ist verständlich, daß bei Unverträglichkeit zwischen dem verwendeten Dispergierhilfsmittel und den zum Einsatz kommenden Retentionshilfsmitteln deren retendierende Wirkung gemindert wird: der Masseanteil des zurückgehaltenen Papierstoffes ist geringer, mit dem ablaufenden Wasser fließen erhebliche Masseanteile des Papierstoffes ab, die Blattbildung "vorarmt".

Bei den Retentionsversuchen hat sich gezeigt, daß bei dem üblicherweise verwendeten anionischen Dispergierhilfsmittel in den üblicherweise zur Anwendung kommenden Zugabekonzentrationen von 0,1 bis 0,2 % zur Einstellung eines stabilen Dispersionszustandes des Aufschlämmers eine deutliche negative Beeinflussung der Wirkung des kationischen Retentionshilfsmittels gegeben ist, im Vergleich zum Einsatz der nicht dispergierten Kreide Omya DX1: Entsprechend den in Zahlentafel 1 aufgeführten Beispielen beträgt die Retention beim Einsatz einer nicht mit anionischem Dispergiermittel dispergierten Kreide in Abhängigkeit von der Zugabemenge am kationischen Retentionshilfsmittel zwischen 58,3 % und 74,1%. Bei Einsatz eines Kreideaufschlämmers, der mit dem anionischen Dispergator Polystabil S 312 dispergiert wurde, ergibt sich eine Retention von nur 53,5 bzw. 63.2 Masse-%, d.h. die Werte liegen um ca. 10 Prozent niedriger. Hier ist eine eindeutige Wechselwirkung zwischen dem anionischen Dispergierhilfsmittel und dem kationischen Retentionshilfsmittel nachgewiesen, und zwar im Sinne einer deutlichen Verschlechterung des Retentionseffektes im Vergleich zur Verwendung einer nicht mit Dispergierhilfsmittel vorbehandelten Kreide.

## Retentionsversuche

| Beispiel Nr. | Pigmentaufschlämmung aus Beispiel Nr. | Retention % Zugabe Retentionsmittel 0,01 Gew.-% | 0,02 Gew.-% |
|---|---|---|---|
| 1 + 2 | 1 | 59,2 | 72,6 |
| 3 + 4 | 2 | 59,6 | 74,1 |
| 5 + 6 | 4 | 60,1 | 72,6 |
| 7 + 8 | 5 | 58,8 | 72,4 |
| 9 + 10 | 6 | 59,3 | 72,0 |
| 11 + 12 | 7 | 59,7 | 73,1 |
| 13 + 14 | 8 | 60,1 | 73,4 |
| 15 + 16 | 9 | 58,9 | 72,2 |
| 17 + 18 | 10 | 58,3 | 73,0 |
| 19 + 20 | 11 | 60,3 | 72,6 |
| 21 + 22 | 12 | 58,7 | 73,1 |
| 23 + 24 | 13 (Vergleich) | 53,5 | 63,2 |
| 25 + 26 | Nullprobe | 60,5 | 73,4 |

Nullprobe = ohne Dispergiermittel
Vergleich = mit Polystabil S 312 dispergiert (handelsübliche Polyacrylsäure)

Lagerversuche

Das Lagerverhalten der Kreideaufschlämmungen wurde nach 28 Tagen beurteilt (Lagertemperatur: 20 ± 5 ° C. unbewegte Lagerung), insbesondere

- die Schichtenbildung,

- die Beschaffenheit ("Aufrührbarkeit") des Bodensatzes bzw. der Suspension bei fehlendem Bodensatz durch Benoten (siehe Tabelle)

Tabelle

| Benotung dar Aufrührbarkeit | |
|---|---|
| Note | Kriterien |
| 1 | unveränderte Suspension |
| 2 | locker, leicht mit Glasstab (Länge: 20 cm, ∅ 7 mmm, abgerundet) aufrührbar; nach Einstechen und Herausziehen des Glasstabes läuft dar Bodensatz bzw. die Suspension zusammen |
| 3 | mit dem Glasstab aufrührbar; nach Einstechen und Herausziehen des Glasstabes läuft der Bodensatz bzw. die Suspension nicht zusammen |
| 4 | mit dem Glasstab noch aufrührbar, stichfest |
| 5 | mit dem Glasstab nicht mehr aufrührbar, stichfest; mit dem Labordissolver (bei 5.000 $min^{-1}$) noch aufrührbar |
| 6 | hart ("steinartig") weder mit dem Glasstab noch mit dem Labordissolver aufrührbar |

- die Viskosität und der pH-Wert der Aufschlämmung nach Aufrühren mit dem Labordissolver

Die unter Verwendung der vorliegenden Dispergiermittel hergestellten Kreideaufschlämmungen zeigten nur eine geringe Schichtenbildung, eine gute "Aufrührbarkeit" (Benotung : 2) und erwiesen sich als pH-stabil. Die Viskosität blieb weitestgehend unverändert.

Beurteilung nach 28 Tagen

| Aufschlämmung Nr. | Schichtung in % | Aufrührbarkeit (Note) | Viskosität mPa.s | pH-Wert |
|---|---|---|---|---|
| 1 | 8 | 2 | 92 | 9,75 |
| 2 | 6 | 2 | 131 | 9,75 |
| 3 | 5 | 2 | 225 | 9,93 |
| 4 | 9 | 2 | 248 | 9,82 |
| 5 | 5 | 2 | 295 | 9,47 |
| 6 | 7 | 2 | 325 | 9,48 |
| 7 | 8 | 2 | 82 | 9,68 |
| 8 | 6 | 2 | 143 | 9,79 |
| 9 | 5 | 2 | 86 | 9,83 |
| 10 | 7 | 2 | 104 | 9,87 |
| 11 | 4 | 2 | 78 | 9,77 |
| 12 | 6 | 2 | 242 | 9,63 |
| 13 (Vergleich) | 16 | 5 | 87 | 9,87 |

## Patentansprüche

**1.** Verwendung von amphoteren, wasserlöslichen Polymeren, die
a) 90 bis 30 Gew.-% Acrylsäure und/oder Methacrylsäure,

b) 10 bis 60 Gew.-% einer Verbindung der Formel

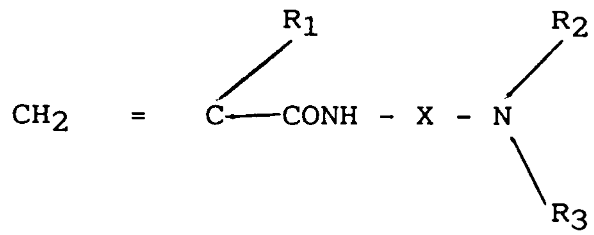

worin $R_1$ Wasserstoff oder Methylrest, $R_2$ und $R_3$, die gleich oder verschieden sind, den Methyl- oder Ethylrest bedeuten und X für einen gegebenenfalls verzweigten Alkylenrest mit 1 bis 5 Kohlenstoff-Atomen steht,

c) erforderlichenfalls 0 bis 50 Gew.-% Acrylamidomethylpropansulfonsäure,

d) 0 bis 10 Gew.-% einer anderen ethylenisch ungesättigten Verbindung einpolymerisiert enthalten und das Molekulargewicht, gemessen bei einem pH-Wert von 8,0 kleiner als 100.000 ist, als Mahlhilfsmittel und/oder Dispergiermittel in wäßrigen Aufschlämmungen von Pigmenten und Füllstoffen mit einem Feststoffgehalt bis zu 80 Gew.-%, für die Papierherstellung in Gegenwart eines Retentionshilfsmittels.

**2.** Verwendung nach Anspruch 1, dadurch gekennzeichnet, daß als Pigment Calciumcarbonat oder Kaolin eingesetzt wird.

**3.** Verwendung nach Anspruch 1 oder 2, dadurch gekennzeichnet, daß die wäßrige Pigmentaufschlämmung einen pH-Wert im alkalischen Bereich aufweist.

## Claims

**1.** The of use amphoteric water-soluble polymers in which

a) 90 to 30%-wt. acrylic acid and/or methacrylic acid,

b) 10 to 60%-wt. of a compound of the formula

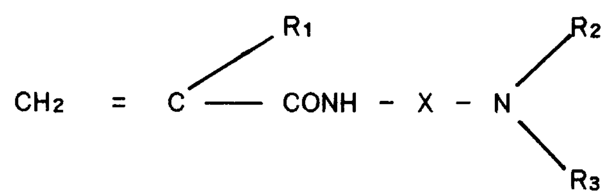

wherein $R_1$ stands for hydrogen or the methyl residue, $R_2$ and $R_3$, which are either the same or different, stand for the methyl or ethyl residue, and X stands for an optionally branched alkylene residue having 1 to 5 carbon atoms,

c) 0 to 50%-wt. acrylamidomethylpropane sulphonic acid, if necessary, and

d) 0 to 70%-wt. of another ethylenically unsaturated compound

are incorporated by polymerization and whose molecular weight, measured at a pH-value of 8.0, is less than 100,000,

as beater additives and/or dispersing agents in aqueous suspensions consisting of pigments and fillers and having a solids content of up to 80%-wt. for paper-making, in the presence of a retention agent.

**2.** The use according to claim 1 characterized in that calcium carbonate or kaolin is used as pigment.

**3.** The use according to claim 1 or 2 characterized in that the aqueous pigment suspension has a pH-value in the alkaline range.

**Revendications**

**1.** Utilisation de polymères amphotères, solubles dans l'eau, qui contiennent, incorporés par polymérisation,

a) 90 à 30% en poids d'acide acrylique et/ou d'acide méthacrylique,

b) 10 à 60% en poids d'un composé de la formule

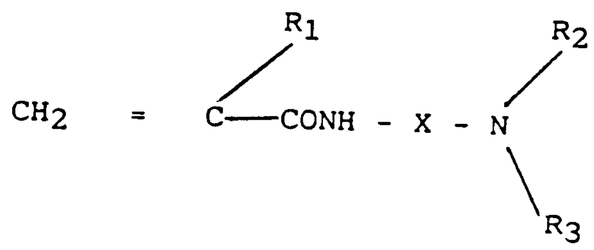

dans laquelle $R_1$ représente un atome d'hydrogène ou le radical méthyle, $R_2$ et $R_3$, qui peuvent être identiques ou différents, représentent le radical méthyle ou le radical éthyle et X représente un radical alkylène comportant de 1 à 5 atomes de carbone, éventuellement ramifié,

c) au besoin, 0 à 50% en poids d'acide acrylamidométhylpropanesulfonique,

d) 0 à 10% en poids d'un autre composé à insaturation éthylénique, le poids moléculaire demeurant inférieur à 100.000, comme mesuré à une valeur du pH de 8,0, à titre d'adjuvants de broyage et/ou d'agents dispersifs dans des suspensions aqueuses de pigments et de charges présentant une teneur en solides allant jusqu'à 80% en poids, en vue de la fabrication du papier en présence d'un adjuvant de rétention.

**2.** Utilisation suivant la revendication 1, caractérisée en ce que l'on utilise du carbonate de calcium ou du kaolin à titre de pigment.

**3.** Utilisation suivant la revendication 1 ou 2, caractérisée en ce que la suspension aqueuse de pigment présente une valeur de pH qui se situe dans la plage alcaline.